# EUROPÄISCHE PATENTANMELDUNG

(11) **EP 0 763 499 A1**
(43) Veröffentlichungstag der Anmeldung: **19.03.1997**
(21) Anmeldenummer: 96112704.0
(22) Anmeldetag: 07.08.1996
(51) Int. Cl.: C01B 15/10

(54) **Verfahren zur Erniedrigung der Lösezeit bei der Herstellung und/oder Umhüllung von Natriumpercarbonat**

(30) Priorität: 15.09.1995 DE 19534274
(71) Anmelder: Degussa Aktiengesellschaft, 60311 Frankfurt (DE)
(72) Erfinder: Bewersdorf, Martin, Dr., 63571 Gelnhausen (DE); Bertsch-Frank, Birgit, Dr., 79613 Rheinfelden (DE); Lortz, Wolfgang, Dr., 63607 Wächtersbach (DE)

(57) **Zusammenfassung**

Sowohl bei der Herstellung als auch Umhüllung von Natriumpercarbonat wird in vielen Fällen ein Alkalimetallsilikat zur Erhöhung der Aktivsauerstoffstabilität eingesetzt. Bei der üblichen Verwendung von Wasserglas mit hohem Modul kommt es zu einer unerwünschten Verlängerung der Lösezeit.

Die Erfindung richtet sich auf ein Verfahren zur Erniedrigung der Lösezeit bei der Herstellung von Alkalimetallsilikat als Stabilisierungsmittel enthaltenden Natriumpercarbonat-Partikeln durch Wirbelschicht-Sprühgranulation und/oder Umhüllung von Natriumpercarbonat-Partikeln mit einer Alkalimetallsilikat enthaltenden Umhüllung, wobei bei der Herstellung und/oder Umhüllung eine Alkalimetallsilikat enthaltende Lösung versprüht wird; erfindungsgemäß wird eine Alkalimetallsilikat enthaltende Lösung mit einem Modul im Bereich von kleiner 3 bis größer 1, insbesondere 1,5 bis 2,3 , versprüht.

Erfindungsgemäß durch Wirbelschicht-Sprühgranulation hergestelltes Natriumpercarbonat und erfindungsgemäß umhülltes Natriumpercarbonat zeichnen sich durch eine hohe Oa-Stabilität und kurze Lösezeit aus und lassen sich damit gut in silikatische Builder enthaltenden Wasch- und Reinigungsmitteln einsetzen.

## Beschreibung

Die Erfindung betrifft ein Verfahren zur Erniedrigung der Lösezeit bei der Herstellung von ein Alkalimetallsilikat als Stabilisierungsmittel enthaltenden Natriumpercarbonat-Partikeln durch Wirbelschicht-Sprühgranulation und/oder bei der Umhüllung von Natriumpercarbonat-Partikeln mit einer Alkalimetallsilikat enthaltenden Umhüllung.

Natriumpercarbonat wird üblicherweise aus Wasserstoffperoxid und Natriumcarbonat hergestellt, wobei die Umsetzung in wäßriger Phase mit nachfolgender Kristallisation, durch Kontaktieren von fester Soda mit wäßriger Wasserstoffperoxidlösung oder durch Wirbelschicht-Sprühgranulation, wobei im allgemeinen eine wäßrige Sodalösung und eine wäßrige Wasserstoffperoxidlösung auf Keime in einer Wirbelschicht aufgesprüht werden, erfolgt. Es ist bekannt, zum Zwecke der Vermeidung eines Verlusts an Aktivsauerstoff (Oa) während der Herstellung und zur Erhöhung der Aktivsauerstoffstabilität des Natriumpercarbonats ein Alkalimetallsilikat in einer Menge bis etwa 5 Gew.-%, berechnet als SiO₂, einzusetzen. Zur weiteren Erhöhung der Oa-Stabilität des Natriumpercarbonats, welche zum Einsatz desselben in Waschmitteln, insbesondere zeolithhaltigen Waschmitteln erforderlich ist, wird Natriumpercarbonat mit einer stabilisierenden Hülle umhüllt. Bei einer der Hüllkomponenten handelt es sich häufig um ein Alkalimetallsilikat.

Gemäß DE-Patentschrift 26 22 458 wird beim Kristallisationsprozeß Natronwasserglas mit einem Modul (SiO₂ zu Na₂O) von 3,5 in die Außenschicht der Partikel eingebaut, um eine ausreichende Oa-Stabilität zu erzielen. Obgleich durch die polymere Kieselsäure die Lösezeit der Natriumpercarbonat-Partikel zunimmt, ist diese im allgemeinen für ihre Anwendung in Waschmitteln ausreichend kurz.

Auch bei den bekannten Wirbelschicht-Sprühverfahren, etwa jenem der DE-PS 20 60 971 und DE-OS 43 29 205, kann Natriumpercarbonat in Anwesenheit bekannter Stabilisatoren, insbesondere Wasserglas, hergestellt werden. Es wurde festgestellt, daß unter Verwendung eines Natronwasserglases mit einem Modul im Bereich 3,2 bis 3,8 hergestellte Natriumpercarbonat-Wirbelschicht-granulate zwar eine befriedigende Oa-Stabilität aufweisen, jedoch eine unerwünscht hohe Lösezeit.

Zur weiteren Erhöhung der Oa-Stabilität werden Natriumpercarbonat-Partikel ein- oder mehrschichtig umhüllt, wobei die Umhüllung ein oder mehrere stabilisierende Stoffe erhält, wie solche aus der Reihe von Alkali- und Erdalkalimetallsalzen, wie insbesondere Sulfate und Chloride von Natrium und Magnesium, Natriumcarbonat und Natriumbicarbonat, Natriumborate und Natriumperborate, Natriumsilikate; weitere Hüllkomponenten sind Borsäuren sowie Alkali- und Erdalkalimetallsalze von organischen Carbonsäuren und Hydroxycarbonsäuren. Alkalimetallsilikate enthaltende Umhüllungen zeigen hierbei eine herausragende Stabilität - siehe beispielsweise DE-C 28 10 379, DE-A 27 12 138, DE-A 43 24 104. Durch eine derartige Alkalimetallsiliakt enthaltende Umhüllung kann die Lösegeschwindigkeit der Natriumpercarbonat-Partikel teilweise erheblich erniedrigt sein.

Gemäß DE-C 28 10 379 wird eine Umhüllung aus Natriumperborat und Natriumsilikat auf Natriumpercarbonat-Partikel aufgebracht, wobei vorzugsweise Wasserglas mit einem SiO₂/Na₂O-Gewichtsverhältnis von 3,2 bis 3,8 angewendet wird. Es wurde festgestellt, daß sich mit zunehmender Menge Wasserglas des genannten Moduls zwar die Lösezeit erhöht, diese aber bei dem durch Kristallisation erzeugten Natriumpercarbonat immer noch ausreichend kurz war, so daß in diesen Fällen kein Problem bezüglich zu langer Lösezeit bestand. Die Lösezeit wird aber stark erhöht, und hieraus resultiert ein Anwendungsproblem, wenn das Verfahren der DE-C 28 10 379 auf nach einem Wirbelschicht-Sprühverfahren hergestellte Natriumpercarbonat-Partikel angewendet wird.

In der DE-A 27 12 138 - Umhüllung mit Natriumpercarbonat und einem Natriumsilikat - werden außer bevorzugt verwendetem Wasserglas auch Natriummetasilikat und Natriumdisilikat erwähnt. Da hier ein durch Kristallisation erzeugtes Natriumpercabonat umhüllt wurde, ergaben sich noch keine Probleme bezüglich der Lösezeit des umhüllten Natriumpercarbonats und damit auch keine Anregung, durch die Auswahl eines ganz bestimmten Wasserglases, zu kürzeren Lösezeiten zu kommen.

Im Verfahren der DE-A 43 24 104 - Umhüllung mit Magnesiumsulfat, Soda und Natriumsilikat - wird beispielsgemäß Natriumsilikat in Form einer Wasserglaslösung mit einem Modul von 3,5 eingesetzt. Zwar lassen sich gemäß diesem Dokument auch Natriumsilikate mit einem Molverhältnis von SiO₂ zu Na₂O von 4 zu 1 bis 1 zu 1 verwenden, jedoch werden Molverhältnisse von 3,5 bis 2,5 bevorzugt. Auch wird das Problem einer zu langen Lösezeit in diesem Dokument nicht angesprochen, so daß diesbezüglich keine Lösung nahegelegt wird.

Ein ähnliches Verfahren wie das zuvor gewürdigte ist aus der EP-A 0 623 553 bekannt: Bei im wesentlichen gleichen Hüllkomponenten ist die Reihenfolge vorzugsweise umgekehrt. Die Lösezeit für das noch nicht umhüllte Natriumpercarbonat ist kurz. Als Natriumsilikat werden Wasserglas Nr. 1 oder Nr. 3 oder Natriummetasilikat eingesetzt; welcher Modul dem Wasserglas Nr. 1 bzw. Nr. 3 zuzuordnen ist, wurde aber nicht offenbart. Die Lösezeiten aller nach dem Verfahren der EP-A 0 623 553 umhüllten Natriumpercarbonat-Partikel liegen in engem Bereich, und es läßt sich kein eindeutiger Unterschied zwischen den eingesetzten Natriumsilikaten erkennen.

Das zuvor gewürdigte Dokument lehrt zwar lagerstabile umhüllte Percarbonatpartikel mit niedriger Lösezeit, nicht aber einen Weg, die Lösezeit bei der Herstellung, insbesondere bei der Wirbelschicht-Sprühgranulation und/oder bei der Umhüllung von Natriumpercarbonat, gezielt einzustellen, insbesondere zu erniedrigen. Hierauf richtet sich aber die Aufgabe der vorliegenden Erfindung.

Gefunden wurde ein Verfahren zur Erniedrigung der Lösezeit bei der Herstellung von ein Alkalimetallsilikat als Stabilisierungsmittel enthaltenden Natriumpercarbonat-Partikeln und/oder Umhüllung von Natriumpercarbonat-Partikeln mit einer Alkalimetallsilikat enthaltenden Umhüllung,
wobei die Herstellung durch Wirbelschicht-Sprühgranulation erfolgt, indem eine Natriumpercarbonat enthaltende wäßrige Lösung oder eine wäßrige Natriumcarbonatlösung und eine wäßrige Wasserstoffperoxidlösung, wobei die Natriumpercarbonat oder die Natriumcarbonat- und/oder die Wasserstoffperoxidlösung oder eine zusätzlich zu versprühende Lösung ein Alkalimetallsilikat enthält, in eine Wirbelschicht, die Keime enthält, deren Abmessungen geringer sind als die der herzustellenden Partikel, gesprüht werden und gleichzeitig Wasser bei einer Wirbelschichttemperatur im Bereich von 40 bis 95 °C verdampft wird,
und wobei die Umhüllung von Natriumpercarbonat-Partikeln durch gleichzeitiges oder hintereinander erfolgendes Aufsprühen einer oder mehrerer mindestens eine Hüllkomponente enthaltender Lösungen, wobei mindestens eine der Lösungen ein Alkalimetallsilikat enthält, auf Natriumpercarbonat-Partikel und Verdampfen von Wasser erfolgt, das dadurch gekennzeichnet ist, daß die zu versprühende Alkalimetallsilikat enthaltende Lösung einen Modul (Molverhältnis SiO₂ zu Alkalimetalloxid) im Bereich von kleiner 3 bis größer 1 aufweist.

Die Unteransprüche richten sich auf bevorzugte Ausführungsformen. Die Bestimmung der Lagerstabilität und der Lösezeit sind den Beispielen zu entnehmen.

Das erfindungsgemäße Verfahren, also die Verwendung einer Alkalimetallsilikatlösung mit einem Modul im Bereich von kleiner 3 und größer 1, vorzugsweise einer Wasserglaslösung mit einem Modul im Bereich von 1,5 bis 2,3 , läßt sich in übliche Verfahren zur Herstellung von Natriumpercarbonat in einer Wirbelschicht integrieren. Bei den bekannten Wirbelschichtverfahren - es wird ausdrücklich auf jene der DE-C 20 60 971, DE-A 43 29 205 und US-A 4,428,914 verwiesen - werden entweder eine Natriumpercarbonat enthaltende wäßrige Lösung oder sowohl eine wäßrige Wasserstoffperoxidlösung und eine wäßrige Natriumcarbonatlösung in einen Wirbelschichttrockner, der Natriumpercarbonatkeime enthält, unter gleichzeitigem Verdampfen von Wasser gesprüht. Die Alkalimetallsilikatlösung wird der H₂O₂- oder Na₂CO₃-Lösung, vorzugsweise letzterer, zugesetzt; die Einsatzmenge Alkalimetallsiliakt liegt im Bereich zwischen 0,1 und 5 Gew.-%, vorzugsweise 0,25 bis 2,5 Gew.-%, jeweils berechnet als SiO₂ und bezogen auf Natriumpercarbonat. Besonders bevorzugt wird eine Natronwasserglaslösung mit einem Modul im Bereich von kleiner 2 und größer 1,5 , etwa eine handelsübliche Lösung mit einem Modul um 1,8 , eingesetzt. Alternativ hierzu kann eine Lösung mit dem genannten Modul auch aus einer Wasserglaslösung mit höherem als dem gewünschten Modul und Alkalimetallhydroxidlauge erzeugt werden. Die Natriumcarbonatlösung und H₂O₂-Lösung werden im Molverhältnis von im wesentlichen 2 zu 3, ein Unter- oder Überschuß eines Reaktionspartners von bis zu 20 % ist aber möglich, unmittelbar vor dem Versprühen gemischt und das Gemisch versprüht oder die beiden Lösungen werden getrennt unter Verwendung von zwei Düsen oder einer Dreistoffdüse auf die Keime gesprüht. Bevorzugt werden Dreistoffdüsen mit externer Mischung der Lösung, wie sie im gattungsgemäßen Verfahren der DE-A 43 29 205 Anwendung finden.

Üblicherweise wird die Temperatur in der Wirbelschicht im Bereich zwischen 40 und 95 °C liegen. Natriumpercarbonat-Partikel, welche größer sind als die Keime, werden mit oder ohne Sichtung aus der Wirbelschichtvorrichtung ausgetragen. Besonders zweckmäßig zur Durchführung des Verfahrens sind Vorrichtungen zur Wirbelschicht-Sprühgranulation mit integrierter Sichtung und Fließrinnen mit einer oder mehreren Sprühzonen. Eine zur Herstellung von Natriumpercarbonat besonders bevorzugte Fließrinne, welche zumindest teilweise aufeinander gerichtete Dreistoffsprühdüsen aufweist, ist in der DE-Patentanmeldung 195 14 187.3 beschrieben.

Wie aus den Beispielen hevorgeht, ist es überraschenderweise möglich, die Lösezeit von in der Wirbelschicht hergestelltem Natriumpercarbonat bei gleicher Menge Alkalimetallsilikat (bezogen auf die Summe aus SiO₂ und Na₂O) erheblich zu reduzieren, wenn anstelle eines Wasserglases mit einem Modul von 3,2 ein solches mit einem Modul von 1,8 eingesetzt wird. Zwar wird durch die erfindungsgemäße Reduzierung des Moduls gegebenenfalls die Oa-Stabilität gemindert, jedoch läßt sich diese Minderung der Oa-Stabilität durch eine heute allgemein geforderte Umhüllung problemlos überkompensieren.

Das erfindungsgemäße Prinzip kann auch in Verfahren zur Umhüllung von Natriumpercarbonat integriert werden. Hierbei kann nach beliebigem Herstellverfahren erzeugtes Natriumpercarbonat eingesetzt werden. Die Umhüllung erfolgt wiederum unter Bedingungen, wo Natriumpercarbonat-Partikel in fluidisiertem Zustand (Wirbelbett) mit einer oder mehreren Hüllkomponenten enthaltenen Lösungen besprüht werden und gleichzeitig und/oder nachfolgend eingebrachtes Wasser verdampft wird. Eine der Lösungen enthält wiederum ein Alkalimetallsilikat mit einem erfindungsgemäßen Modul. Die Einsatzmenge Alkalimetallsilikat liegt im allgemeinen zwischen 0,1 und 2,5 Gew.-%, vorzugsweise zwischen 0,5 und 1 Gew.-%, jeweils berechnet als SiO₂ und bezogen auf Natriumpercarbonat. Durch Reduzierung des Moduls wird die Lösezeit gemindert. Überraschenderweise kommt es aber hier bei gleicher Einsatzmenge Alkalimetallsilikat (Summe aus SiO₂ und Alkalimetalloxid), aber reduziertem Modul, zu keiner Minderung der Oa-Stabilität. Das erfindungsgemäße Prinzip läßt sich auf Umhüllungen anwenden, wie sie in den einleitend gewürdigten Dokumenten bekannt sind. Besonders bevorzugte Ausführungsformen enthalten als Hüllkomponenten außer Alkalimetallsilikat ein Magnesiumsalz und Natriumcarbonat oder Natriumsulfat und Natriumcarbonat. Das Alkalimetallsilikat wird zweckmäßigerweise nicht als Bestandteil einer Magnesiumsalz enthaltenden Lösung eingesetzt, sondern als einzelne Lösung oder im Gemisch mit einer Na₂SO₄- und/oder Na₂CO₃ enthaltenden Lösung. Die Bedingungen bei der Umhüllung und Vorrichtungen zur Durchführung entsprechen jenen, die dem Fachmann aus den zitierten Dokumenten bekannt sind und zuvor auch bei der Herstellung des Natriumpercarbonatkerns beschrieben wurden. Die gesamte Umhüllung beträgt im allgemeinen 1 bis 25 Gew.-%, vorzugsweise 2 bis 10 Gew.-%, bezogen auf Natriumpercarbonat.

Gemäß einer besonders bevorzugten Ausführungsform der Erfindung wird Natriumpercarbonat mittels einer Wirbelschicht-Sprühgranulation hergestellt und in der Wirbelschicht umhüllt, wobei sowohl bei der Herstellung als auch der Umhüllung eine Alkalimetallsilikatlösung mit erfindungsgemäßem Modul eingesetzt wird. Auf diese Weise wird Natriumpercarbonat mit ausreichend geringer Lösezeit und guter Langzeitstabilität erhalten.

Erfindungsgemäß hergestellte nicht-umhüllte und umhüllte Natriumpercarbonat-Partikel lassen sich in Wasch- und Bleichmitteln, insbesondere silikatische Builder enthaltenden Wasch- und Bleichmitteln, einsetzen.

### Beispiele

a) Bestimmung der Lösezeit:
2 g nicht-umhülltes oder umhülltes Natriumpercarbonat werden in 1 l Wasser um 15 °C gerührt. Die Lösezeit wird definiert als die Zeit, zu welcher 95 % gelöst sind; die Bestimmung erfolgt konduktometrisch.
Zum Vergleich der Lösezeit von zwei unterschiedlich hergestellten/umhüllten Produkten müssen diese eine vergleichbare Körnung aufweisen; sofern erforderlich, werden enge Siebfraktionen miteinander vergliechen.
b) Bestimmung der Lagerstabilität in Waschmittelabmischungen:
Ein phosphatfreies aber zeolithhaltiges Waschmittelpulver, Aktivator TAED und ein umhülltes beziehungsweise nicht-umhülltes Natriumpercarbonat (NaPc) werden in einer solchen Menge gemischt, daß das Gemisch 5 % TAED enthält und der Oₐ-Gehalt etwa 2,35 Gew.-% beträgt. Bestandteile im Waschmittelpulver in Gew.-%:

| | |
|---|---|
| Anionische Tenside | 12 |
| Nichtionische Tenside | 8 |
| Zeolith A | 36 |
| Soda | 10 |
| Na-silikate | 3 |
| Rest incl. Feuchte | 31. |

800 g des jeweiligen Gemischs werden in handelsüblichen, wasserabweisend imprägnierten und verklebten E1-Waschmittelpaketen bei 30 °C und 80 % relativer Feuchte im Klimaschrank gelagert. Pro Entnahmetermin - nach 2, 4 und 8 Wochen - wird ein Paket gelagert. Der Oₐ-Gehalt wird in üblicher Weise permanganometrisch bestimmt; aus dem Ausgangs-Oₐ-Gehalt und dem Oₐ-Gehalt nach 2, 4 und 8 Wochen wird der jeweilige Oₐ-Erhalt in % ermittelt.

### Beispiel 1 und Vergleichsbeispiel 1

### Verringerung der Lösezeit bei der Herstellung:

In einer Vorrichtung zur Wirbelschicht-Sprühgranulation wurde unter Bedingungen wie sie in Beispiel 2 der DE-A 43 29 205 angegeben sind, Natriumpercarbonat hergestellt. In Beispiel 1 wurde Natronwasserglas mit einem Modul von 1,8 der Sodalösung zugefügt, im Vergleichsbeispiel 1 ein Natronwasserglas mit einem Modul von 3,2; die Einsatzmenge Natronwasserglas betrug in beiden Fällen 2,6 Gew.-%, berechnet als Summe aus SiO₂ und Na₂O und bezogen auf Natriumpercarbonat. Die Wasserglaslösung mit dem Modul 1,8 wurde erzeugt aus einer Wasserglaslösung mit dem Modul 3,2 und Natronlauge.

Bei im wesentlichen gleicher Kornverteilung betrug die Lösezeit des Produkts von Beispiel 1 2,3 Minuten und jene des Vergleichsbeispiels 1 4,8 Minuten.

### Beispiel 2 und Vergleichsbeispiel 2

Umhüllung eines Wirbelschicht-Sprühgranulats mit 2,5 Gew.-% Magnesiumsulfat, 2,5 Gew.-% Soda und 1 Gew.-% Natronwasserglas. Zunächst wurde eine wäßrige MgSO₄-Lösung und anschließend eine Na₂CO₃ und Natronwasserglas enthaltende Lösung in einer Wirbelschicht-Sprühgranulationsvorrichtung aufgebracht. Die einzelnen Versuche unterscheiden sich nur durch den Modul des eingesetzten Wasserglases. Die Ergebnisse folgen aus Tabelle 1.

**Tabelle 1**

| | Vergleichsbeispiel 2 | Beispiel 2 | | |
|---|---|---|---|---|
| | | 2.1 | 2.2 | 2.3 |
| Modul | 3,2 | 2,2 | 1,7 | 1,3 |
| Lösezeit (Min.) | 5,7 | 5,3 | 5,1 | 4,8 |
| Oa-Erhalt: Start | 100 | 100 | 100 | 100 |
| nach 2 Wochen | 98 | 97 | 98 | 100 |
| nach 4 Wochen | 94 | 92 | 94 | 95 |
| nach 8 Wochen | 84 | 84 | 85 | 82 |

### Beispiel 3 und Vergleichsbeispiel 3

In einer Vorrichtung zur Wirbelschicht-Sprühgranulation wurde Natriumpercarbonat hergestellt (analog DE-A 43 29 205), wobei der zu versprühenden Sodalösung zuvor Wasserglas mit dem angegebenen Modul zugesetzt wurde - Einsatzmenge jeweils 2,6 Gew.-% Natriumsilikat (Summe der Menge aus SiO₂ und Na₂O), bezogen auf Natriumpercarbonat.

Anschließend wurden die erhaltenen Produkte jeweils, wie in Beispiel 2, zweischichtig umhüllt mit 1,6 Gew.-% MgSO₄ und 1,6 Gew.-% Na₂CO₃ und 0,8 Gew.-% Alkalimetallsilikat, bezogen auf eingesetztes Natriumpercarbonat. Die Ergebnisse folgen aus Tabelle 2.

**Tabelle 2**

| | Vergleichsbeispiel 3 | | Beispiel 3 | |
|---|---|---|---|---|
| | nicht-umhüllt | umhüllt | nicht-umhüllt | umhüllt |
| Modul | 3,1 | 3,1 | 1,8 | 1,8 |
| Lösezeit | 2,2 | 3,1 | 2,2 | 2,4 |
| Oa-Erhalt: Start | 100 | 100 | 100 | 100 |
| nach 2 Wochen | 67 | 94 | 60 | 100 |
| nach 4 Wochen | 49 | 86 | 36 | 95 |

Durch die Absenkung des Moduls des bei der Herstellung und Umhüllung eingesetzten Wasserglases erhält man rascher lösliche Produkte mit hoher beispielsgemäß sogar höherer Lagerstabilität als bei Verwendung eines Wasserglases mit höherem Modul.

## Patentansprüche

1. Verfahren zur Erniedrigung der Lösezeit bei der Herstellung von ein Alkalimetallsilikat als Stabilisierungsmittel enthaltenden Natriumpercarbonat-Partikeln und/oder Umhüllung von Natriumpercarbonat-Partikeln mit einer Alkalimetallsilikat enthaltenden Umhüllung,
wobei die Herstellung durch Wirbelschicht-Sprühgranulation erfolgt, indem eine Natriumpercarbonat enthaltende wäßrige Lösung oder eine wäßrige Natriumcarbonatlösung und eine wäßrige Wasserstoffperoxidlösung, wobei die Natriumpercarbonat oder die Natriumcarbonat- und/oder die Wasserstoffperoxidlösung oder eine zusätzlich zu versprühende Lösung ein Alkalimetallsilikat enthält, in eine Wirbelschicht, die Keime enthält, deren Abmessungen geringer sind als die der herzustellenden Partikel, gesprüht werden und gleichzeitig Wasser bei einer Wirbelschichttemperatur im Bereich von 40 bis 95 °C verdampft wird,
und wobei die Umhüllung von Natriumpercarbonat-Partikeln durch gleichzeitiges oder hintereinander erfolgendes Aufsprühen einer oder mehrerer mindestens eine Hüllkomponente enthaltender Lösungen, wobei mindestens eine der Lösungen ein Alkalimetallsilikat enthält, auf Natriumpercarbonat-Partikel und Verdampfen von Wasser erfolgt,
dadurch gekennzeichnet,
daß die zu versprühende Alkalimetallsilikat enthaltende Lösung einen Modul (SiO₂ zu Alkalimetalloxid) im Bereich von kleiner 3 bis größer 1 aufweist.

2. Verfahren nach Anspruch 1,
dadurch gekennzeichnet,
daß die zu versprühende Alkalimetallsilikat enthaltende Lösung einen Modul im Bereich von 1,5 bis 2,3 aufweist.

3. Verfahren nach Anspruch 1 oder 2,
dadurch gekennzeichnet,
daß man Natriumpercarbonat-Partikel durch Wirbelschicht-Sprühgranulation herstellt und anschließend umhüllt, wobei sowohl bei der Herstellung als auch bei der Umhüllung eine Alkalimetallsilikat enthaltende Lösung mit einem Modul im Bereich von kleiner 3 bis größer 1, vorzugsweise 1,5 bis 2,5 , versprüht wird.

4. Verfahren nach einem der Ansprüche 1 bis 3,
dadurch gekennzeichnet,
daß man zur Herstellung der zu versprühenden Alkalimetallsilikat enthaltenden Lösung zu einer gegebenenfalls andere zu versprühende Komponenten enthaltenden wäßrigen Lösung eine Wasserglaslösung mit einem Modul von kleiner 3 bis größer 1 oder ein Gemisch aus einer höhermoduligen Wasserglaslösung und Alkalimetallhydroxidlauge im Molverhältnis entsprechend dem gewünschten Modul zugibt.

5. Verfahren nach Anspruch 3,
dadurch gekennzeichnet,
daß man eine Natriumwasserglaslösung oder ein Gemisch aus einer Natriumwasserglaslösung und Natronlauge zugibt.

6. Verfahren nach einem der Ansprüche 1 bis 5,
dadurch gekennzeichnet,
daß man bei der Herstellung der Natriumpercarbonat-Partikel durch Wirbelschicht-Sprühgranulation Alkalimetallsilikat in einer Menge von 0,1 bis 5 Gew.-%, vorzugsweise 0,25 bis 2,5 Gew.-%, SiO₂, bezogen auf Natriumpercarbonat, einsetzt.

7. Verfahren nach einem der Ansprüche 1 bis 6,
dadurch gekennzeichnet,
daß man bei der Umhüllung der Natriumpercarbonatpartikel Alkalimetallsilikat in einer Menge von 0,1 bis 2,5 Gew.-%, vorzugsweise 0,5 bis 1 Gew.-%, SiO₂, bezogen auf Natriumpercarbonat, einsetzt.
